# EUROPEAN PATENT SPECIFICATION

(11) **EP 0 639 211 B1**
(45) Date of publication and mention of the grant of the patent: **27.11.1996**
(21) Application number: 93910510.2
(22) Date of filing: 07.05.1993
(51) Int. Cl.: C09D 5/34, E04F 15/12

(54) **LEVELLING MATERIAL**
NIVELLIERENDES MATERIAL
MATERIAU DE MISE A NIVEAU

(30) Priority: 08.05.1992 SE 9201459
(43) Date of publication of application: 22.02.1995
(73) Proprietor: STRABRUKEN AB, S-191 04 Sollentuna (SE)
(72) Inventor: ALEXANDERSON, Johan, S-111 40 Stockholm (SE); SÄFSTRÖM, Bo, S-112 66 Stockholm (SE)
(74) Representative: Lind, Charles Leo
(86) International application number: SE9300402
(87) International publication number: WO9323484

(56) References cited:
- EP-A- 0 116 524

## Description

The present invention deals with a screed material or levelling compound of the kind that is described in the preamble of the claim and that is to be used in the production of so called levelling layers, which are intended to level uneven substrates, e.g. concrete constructions, with the purpose of achieving a surface which is smooth and even enough to serve as a floor surface.

Since a long time levelling of e.g. concrete constructions have been done by casting onto the load bearing concrete structure a relatively thick layer of a cement mortar. This early solution of the problem however has considerable disadvantages, among which it can be mentioned that the method is very time consuming and labour intensive.

Another technique that has been used to make the concrete substrate smooth and even enough to fulfill the requirements of the later floor coverings, has been that one has tried to make the concrete itself even enough, e.g. by vibration casting, power floating etc, but this technique has not functioned well in practice, because it is costly and time consuming.

Today, levelling of uneven substrates preferably is done by using pumpable levelling compounds. However, when the demand of levelling is great because the unevenness exceeds 10-20 mm, which often is the case for prefabricated concrete elements, the high consumption of material leads to too high costs when you want to meet the requirements for loading capacity which normally are asked for.

A common requirement in local codes of practice, e.g. the Swedish Hus AMA 83, is that the levelling compound shall have an adhesion of at least 0.5 MPa measured after loading with a rolling office chair castor according to the Swedish Standard SS 92 35 07. The loading capacity of a product is determined by the content of polymer and the content of binder. These two ingredients constitute the major part of the production cost.

The present invention has the aim to achieve a new levelling material of the decribed kind and with considerably lower costs than with traditional techniques for the production of levelling layers on uneven substrates, where the unevenness is great, e.g. exceeds 10-20 mm. This is of utmost importance, since the development trend goes towards thicker levelling layers because of increased requirements on sound insulation and also because of demands for placing installations in the floor screed.

This aim is achieved by the invention with a levelling material of the described kind and which is characterized by the means in the characterizing part of claim 1.

It has been found that with this levelling material, a floor can be produced, which in the long run fulfills the demand for loading capacity for flooings of at least 0.5 MPa, measured according to the above mentioned standard and which can be produced with a coarse levelling layer with relatively low production costs, in spite of the fact that the loading capacity of the coarse levelling layer itself is at least 20% lower than the finished floor which is produced thereof. As a loading layer, any material which is suited for the purpose can used such as wood, steel, metal, plastic, ceramic, fine levelling compounds of known kind etc.

As example of production of a finished, levelled floor with the use of the levelling material according to the invention, a levelling can be applied in two layers. The first layer is made of the pumpable coarse levelling compound which is applied at a thickness of at least 10 mm. On this coarse levelling compound then a wearing or loading layer is applied consisting of a fine levelling compound with 2-15 mm thickness, preferably 5-10 mm.

Since the coarse levelling compound shall not constitute the finished surface, it can, as mentioned before, be made considerably weaker than usual and thereby can the costs for binder and polymer be kept low. The binder content is 4-14 %, preferably 5-10 % of the dry weight of the levelling compound.

The binder in the coarse levelling compound, which preferably is hydraulic, can e.g. be high aluminous cement, different kinds of gypsum, portland cement, natural cement or combinations thereof.

The water content is e.g. 15-20 % of the dry weight of the levelling compound, which means that the water-binder ratio, i.e. the water content divided by the binder content, is 1-5, preferably 1.5-4.

The coarse levelling compound contains 85-95 % by weight of sand and filler, preferably 89-94 % by weight. The filler can e.g. be ground dolomite, ground lime stone, pulverized fuel ash from coal fired power stations, ground granulated blast furnace slag or combinations thereof.

Except for binder, sand and filler, the coarse levelling matierial contains additives which are conventionally used in levelling compounds, viz plasticizer, polymer, cellulose, salts and antifoaming agents, altogether not more than 1 % by weight. The content of polymer is considerably lower than in conventional levelling compounds.

The coarse levelling layer decribed above has a compressive strength of 2-17 MPa, preferably 3-8 MPa, while its resistance against, wheel loading according to the Swedish Standard SS 92 35 07 is less or equal to 0.4 MPa.

On top of the described coarse levelling layer e.g. a conventional levelling compound is applied at 2-15 mm thickness, preferably 5-10 mm, which in the following is called fine levelling layer. This compound is pumped and is preferably self smoothing. The requirements on this material is on one hand that the shrinkage should be at the most 0.15 %, preferably at the most 0.10 %, when measured at drying in 50 % RH and on the other hand that it shall have a resistance against rolling wheel loading measured according the Swedish Standard SS 92 35 07 which is at least 0.5 MPa. The requirements regarding maximum shrinkage is caused by the risk that the fine levelling layer otherwise can disrupt the relatively weak coarse levelling layer. The same is the case for the requirement for a maximum layer thickness of 15 mm. Of course, this risk does not exist with loading layers made of wood or other floor coverings where there is no more shrinkage after the application of the floor covering.

The requirement regarding resistance to loading is caused by the fact that the combined layer shall be able to withstand rolling wheel loading. The same goes for the requirement of a minimum thickness of 2 mm for such a fine levelling layer.

Examples of commersial products which can serve as fine levelling layers are as follows:
- Universal and Grov from Strabruken AB
- 147 Pronto and 311 Grosso from Allmän Byggnadsservice AB
- Vetonit levelling compound from Partek Vetonit AB
- K15 from Ardex Chemie GmbH

The invention will in the following be described by non-restricting examples. In the examples, the percentages given are by weight of the total dry weight unless otherwise stated.

### Example 1

Coarse levelling compounds were made with binder contents, water-binder ratios and filler and sand contents according to Table 1.

**Table 1**

| Compositions of coarse levelling layers. | | | |
|---|---|---|---|
| Sample no | Binder content % by weight | Water-binder ratio | Filler + sand % by weight |
| 1 | 2 | 8.8 | 97 |
| 2 | 4 | 4.4 | 95 |
| 3 | 6 | 2.9 | 93 |
| 4 | 8 | 2.2 | 91 |
| 5 | 10 | 1.8 | 89 |
| 6 | 12 | 1.5 | 87 |
| 7 | 14 | 1.2 | 85 |

The binder consisted of 2/3 high aluminious cement and 1/3 anhydrate gypsum. The filler consisted of ground dolomite. The other additives amounting to 1 % of the dry weight were of conventional kinds, viz plasticizers, polymer, cellulose, unorganic salts and defoamers. However, the content of polymer was considerably lower than normally.

On these coarse levelling layers, except for sample number 7, a fine levelling layer was applied at 5 mm thickness. This fine levelling layer had the following composition:

| | |
|---|---|
| Binder | 23 % |
| Water-binder ratio | 1 |
| Filler + sand | 74 % |
| Polymer | 2 % |
| Other additives | 1 % |

The ingredients in the conventional fine levelling layer were the same as in the coarse levelling layer, only the proportions were very different. The shrinkage of the fine levelling compound was tested after drying in 50 % RH and was found to be 0.07 %.

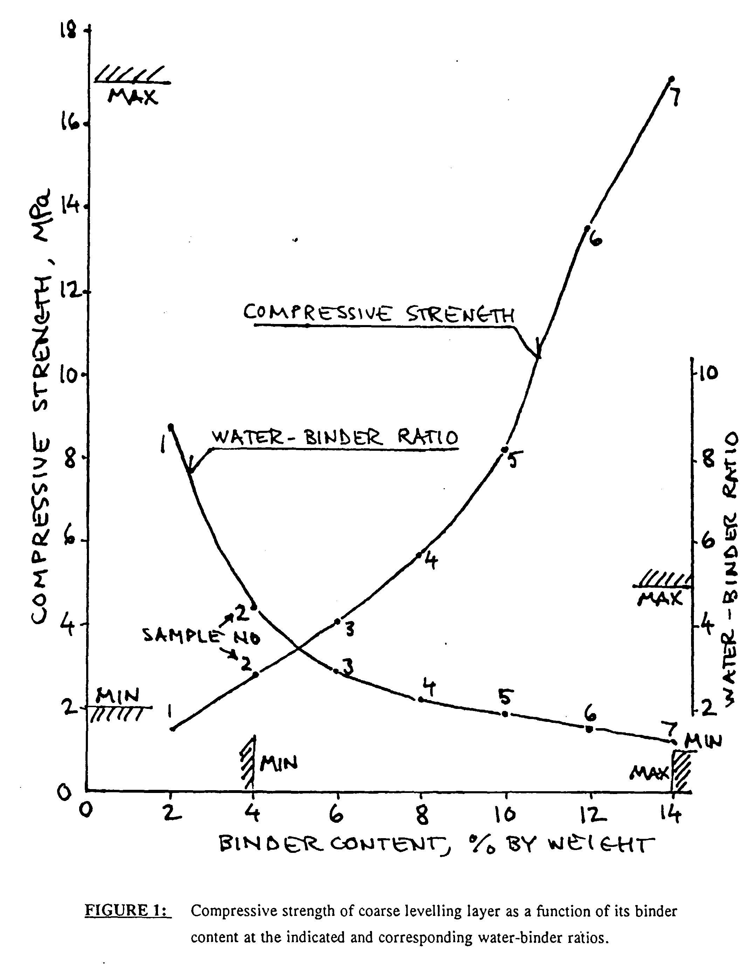

The compressive strength of the seven coarse levelling materials was tested on cast test specimens after 28 days. The specimens were 40 x 40 x 160 mm and were stored in 50 % RH. The testing was done in a manner normally used for cement mortar and the test results are given in Table 2 and figure 1.

**Table 2**

| Compressive strength of coarse levelling compound and the resistance against wheel loading of the combined layer. | | | |
|---|---|---|---|
| Sample no | Compressive strength of coarse levelling compound, MPa | Resistance to wheel loading of combined layer, MPa | Note |
| 1 | 1.5 | - | Rupture in coarse levelling layer at wheel loading |
| 2 | 2.8 | 0.6 | |
| 3 | 4.0 | 0.6 | |
| 4 | 5.6 | 0.6 | |
| 5 | 8.1 | 0.6 | |
| 6 | 13.5 | 0.6 | |
| 7 | 17.0 | 0.2 *) | *) No fine levelling layer in this sample. |

Further, the resistance to wheel loading was tested according to the Swedish Standard SS 92 35 07. The results from this testing are also shown in Table 2, where samples 1-6 consist of a combined layer of coarse and fine levelling layers, while sample 7 consists solely of a coarse levelling layer.

From tables 1 and 2, it can be seen that the coarse levelling compound alone cannot withstand the wheel loading requirement of 0.5 MPa even at a binder content of 14 %. However, when there is a fine levelling layer on top, the combined layer can fulfill the loading requirement, provided that the binder content is at least 4 %.

### Example 2

The new levelling material and the described technique was tested in full scale in a building project. Two different formulations of coarse levelling compound were used as follows:

| | Binder | Water-binder ratio | Filler + sand |
|---|---|---|---|
| Formulation 1 | 7 % | 2.5 | 92 % |
| Formulation 2 | 10 % | 1.8 | 89 % |

The coarse levelling compound was produced as a dry mortar on a factory and 17.5 % and 18 % water resp. was added at the building site in a continous mixerpump. It was pumped out on the substrate, which consisted of prestressed concrete elements, to a thickness of 40-60 mm. After a few hours, the surface could be walked upon, and then a 5-10 mm thick layer of a conventional fine levelling compound - with the product name Universal from Sträbruken AB - was pumped out.

The floor surfaces were inspected after eight weeks and no skrinkage cracks could be observed, neither when formulation 1 nor formulation 2 had been used.

The new levelling material and the described technique with a relatively weak coarse levelling layer with low binder content and high water-binder ratio however has been shown to have further advantages. The drying time can be shortened towards half the time that is needed for conventional levelling compounds. Further, it has been possible to use screws when applying bases for partition walls, which is considerably quicker and less complicated than using traditional fastening with a bolting gun.

The coarse levelling material furthermore can be used alone, without fine levelling layer in such cases when the described loading requirement is not applicable, e.g. where there is little loading or where the flooring can take the loading which otherwise the fine levelling layer should take. Examples of the latter is wooden floors and ceramic tiles.

## Claims

1. Levelling material for levelling uneven substrates, which material is applied on the substrate in at least two layers, one coarse levelling layer of at least 10 mm thickness made of a pumpable coarse levelling compound and on this a loading layer **characterized in** that the coarse levelling layer consists of a pumpable coarse levelling compound having a binder content of 4-14 %, preferably 5-10 % of the dry weight of the compound, a water-binder ratio of 1-5, preferably 1.5-4, and a content of sand and filler of 85-95 %, preferably 89-94 % by weight, that the coarse levelling layer of said composition is adjusted to have a compressive strength after 28 days hardening of 2-17 MPa, preferably 3-8 MPa and a resistance against wheel loading which is at the most 0.4 MPa when measured according to the Swedish Standard SS 923507 or similar local standard while the loading layer is of such a type that it rests with all of its bottom surface evenly distributed over the top surface of the coarse levelling layer and has an even thickness.

2. Levelling material according to claim 1, **characterized in** that the loading layer consists of a fine levelling layer with a thickness of 2-15 mm, preferably 5-10 mm, a shrinkage after drying in 50 % RH of at the most 0.15 %, preferably at the most 0.1 %, and a resistance against wheel loading of at least 0.5 MPa when measured according to the Swedish Standard SS923507 or similar local standard.

3. Levelling material according to claim 1 or 2, **characterized in** that the loading layer is made of a pumpable, preferably self smoothing, fine levelling compound with a shrinkage after drying in 50 % RH of at the most 0.15 %, preferably at the most 0.1 %.

## Patentansprüche

1. Ausgleichsmaterial zum Ausgleichen von unebenen Untergründen, wobei das Material in wenigstens zwei Schichten auf dem Untergrund aufgebracht ist; einer groben Ausgleichsschicht von wenigstens 10 mm Dicke aus einer pumpbaren groben Ausgleichsmischung und einer darauf befindlichen Lastschicht, dadurch gekennzeichnet, daß die grobe Ausgleichsschicht einen Binderanteil von 4 - 14%, vorzugsweise 5 - 10% des Trockengewichtes der Mischung aufweist, ein Wasser/Binder-Verhältnis von 1 - 5, vorzugsweise 1,5 - 4 hat und 85 - 95%, vorzugsweise 89 - 94 Gew.% Sand und Füllmittel beinhaltet, daß die grobe Ausgleichsschicht mit besagter Zusammensetzung so ausgelegt ist, daß sie nach 28 Tagen Härten eine Druckfestigkeit von 2 - 17 MPa, vorzugsweise 3 - 8 MPa hat und gegen Radlasten von max. 0,4 MPa, gemessen nach schwedischem Standard SS 923507 oder ähnlichen lokalen Standards, beständig ist, wobei die Lastschicht mit ihrer ganzen unteren Fläche gleichmäßig ausgebreitet auf der Oberfläche der groben Ausgleichsschicht ruht und eine gleichmäßige Dicke hat.

2. Ausgleichsmaterial nach Anspruch 1, dadurch gekennzeichnet, daß die Lastschicht aus einer feinen Ausgleichsschicht mit einer Dicke von 2 - 15 mm, vorzugsweise 5 - 10 mm besteht und nach dem Trocknen, gemessen in 50% RH, eine Schrumpfung von max. 0,15%, vorzugsweise max. 0,1% hat und beständig gegen Radlasten von mindestens 0,5 MPa, gemessen nach schwedischem Standard SS 922307 oder ähnlichen lokalen Standards, ist.

3. Ausgleichsmaterial nach Anspruch 1 oder 2, dadurch gekennzeichnet, daß die Lastschicht aus einer pumpbaren, vorzugsweise selbstglättenden Feinausgleichsmischung besteht und nach dem Trocken, gemessen in 50% RH, eine Schrumpfung von max. 0,15% vorzugsweise maximal 0,1% hat.

## Revendications

1. Matériau nivelant pour le nivelage de substrats irréguliers, ce matériau étant appliqué en au moins deux couches, une couche de nivelage grossier d'une épaisseur d'au moins 10 mm constituée d'un composé nivelant grossier pompable, et d'une couche de charge superposée,
caractérisé en ce que la couche nivelante grossière consiste en un composé nivelant grossier pompable ayant une teneur en liant de 4-14%, et de préférence de 5-10% par rapport au poids à sec du composé, une proportion eau/liant de 1-5, et de préférence de 1,5-4 et une teneur en sable et en charge de 85-95% et de préférence de 89-94% en poids
la couche nivelante grossière de cette composition est ajustée de manière à avoir une résistance à la compression, après 28 jours de durcissement, de 2-17 MPa et de préférence de 3-8 MPa et une résistance à la charge des roues qui soit au plus de 0,4 MPa quand elle est mesurée conformément à la norme suédoise SS923507 ou à une norme locale semblable, et
la couche de charge est d'un type tel qu'elle repose avec la totalité de sa surface inférieure répartie de manière uniforme sur la surface supérieure de la couche nivelante grossière et qu'elle ait une épaisseur uniforme.

2. Matériau nivelant selon la revendication 1, caractérisé en ce que la couche de charge consiste en une couche nivelante fine ayant une épaisseur de 2-15 mm, et de préférence de 5-10 mm, un retrait après séchage dans RH à 50% d'au plus 0,15% et de préférence d'au plus 0,1% et une résistance à la charge des roues d'au moins 0,5 MPa, quand elle est mesurée conformément à la norme suédoise SS 923507 ou une norme locale semblable.

3. Matériau nivelant selon les revendications 1 ou 2, caractérisé en ce que la couche de charge est constituée d'un composé nivelant fin, pompable, de préférence auto-lissant, ayant un retrait après séchage dans RH à 50% d'au plus 0,15% et de préférence d'au plus 0,1%.
